# NEW EUROPEAN PATENT SPECIFICATION

(11) **EP 1 341 680 B2**
(45) Date of publication and mention of the opposition decision: **13.08.2008**
(45) Mention of the grant of the patent: 16.02.2005
(21) Application number: 01270430.0
(22) Date of filing: 13.12.2001
(51) Int. Cl.: B60C 23/00, G01L 17/00

(54) **WHEEL INCORPORATING CONDITION MONITORING SYSTEM**
RAD MIT ZUSTANDSÜBERWACHUNGSSYSTEM
ROUE CONCERNANT UN SYSTEME DE SURVEILLANCE D'ETAT

(30) Priority: 13.12.2000 GB 0030405
(43) Date of publication of application: 10.09.2003
(73) Proprietor: Transense Technologies PLC, Bicester, Oxon OX25 5HD (GB)
(72) Inventor: FREAKES, Graham Michael, Charlbury, Oxfordshire OX7 3TH (GB); VILE, David Daniel George, Bicester, Oxfordshire OX27 8DX (GB); KALININ, Victor Alexandrovich, Headington, Oxford OX3 OAR (GB); BECKLEY, John Peter, Cowley, Oxford OX4 3QS (GB); LONSDALE, Anthony, Banbury, Oxfordshire OX15 6EY (GB)
(74) Representative: Hedges, Martin Nicholas
(86) International application number: PCT/GB2001/005502
(87) International publication number: WO 2002/047924

(56) References cited:
- WO-A-00/47429
- US-A- 3 723 966
- US-A- 4 529 961
- US-A- 5 163 320
- US-A- 5 289 160
- US-A- 5 546 070
- US-A- 5 731 754
- US-A- 5 741 966
- US-A- 5 838 229
- US-A- 6 034 596
- US-A- 6 062 072

## Description

This invention relates to a non-metallic wheel which incorporates a condition monitoring system. The condition monitoring system includes in-wheel components for measuring physical parameters and may have memory devices containing for example manufacturing data. The required components and associated circuitry may be moulded into the wheel at the point of manufacture or may be embedded after manufacture or may in part be moulded into the wheel at the point of manufacture and in part embedded in or attached to the wheel post manufacture. The preferred wheel is particularly suitable for use on a car (automobile) or van or lorry (truck) or on civil engineering plant (face shovels, scrapers, graders etc.) but the invention is not limited to such applications and may indeed be applied to any wheel requiring the monitoring provided by the present invention.

In accordance with the present invention a wheel has a structural portion formed from a non-metallic material, the structural portion incorporating as an integral part thereof three SAW sensors oriented to measure strain in three orthogonal axes to monitor characteristics of the wheel and/or of a tyre mounted on the wheel and/or of a fluid contained between the wheel and the tyre, whilst the wheel/tyre is in use.

As used herein the term "structural portion" means a portion of the wheel which, at least under certain operating conditions of the wheel, is a load bearing part of the wheel. The structural portion may, for example, be a portion of the rim of the wheel, or a portion of a hub of the wheel, or a spoke of the wheel.

The term "non-metallic material" as used herein means a material which is predominantly non-metallic and covers materials which may incorporate metallic elements, for example reinforcing elements. The preferred non-metallic material of the present invention is a synthetic plastics material which may optionally be reinforced, for example with glass fibres or other reinforcement materials.

The term "passive sensor" as used herein means a sensor which is capable of providing an output indicative of a sensed condition without the use of an electro-chemical primary or secondary cell mounted on the wheel. The sensor may, for example, be a surface acoustic wave (SAW) device (for example a SAW resonator) and an associated antenna and RF couple

A SAW resonator sensor may be operated by exciting the resonator with a radio signal to produce a resonant frequency response. SAW resonators may accordingly be regarded as entirely "passive" in the sense that the output signal from them is produced in response to the input signal which they receive, without the need for any separate power supply. Sensors based on SAW devices may be incorporated in wheels and used indefinitely to monitor appropriate physical conditions of the wheels. Equally SAW delay line based sensors or other passive sensors may be used.

Preferably, the wheel includes a silicon device for calculation of parameters and/or memorising preset values. Furthermore if an ASIC is required for the interrogation of the passive sensor it may also be incorporated within the wheel. If this requires electrical power within the wheel the required power can be generated locally by suitable means including mechanical or electromechanical means for generating electrical energy within the wheel as the wheel rotates, and may be stored by suitable means for storing the electrical energy. Additionally or alternatively the power supply may be external, for example by means of RF energy transmitted to the wheel and rectified within the wheel, or by inductive coupling to the wheel.

Any required calculation or memory functions (so called "intelligence") may reside in the stationary part of the vehicle and be RF energy coupled to the passive sensors incorporated in the wheel from the stationary ASIC. There also exist embodiments where a combination of in-wheel intelligence and external intelligence is provided.

There are three major classes and many sub embodiments of the proposed wheel. The major classes may be described as a fully passive wheel, a semi-passive wheel and an active wheel.

The fully passive wheel may have embedded SAW based sensors or other passive sensors, for example Passive Impedance to Frequency Converter (PIFC) or Passive Impedance to Amplitude Converter (PIAC) sensors (which are known in the art). These are addressed in a non-contact manner via an RF couple or pair of antennas. On board the stationary part of the vehicle is the necessary electronics in the form for example of an ASIC. This generates interrogation signals and interprets the returned signals to obtain data about physical parameters of the wheel. This can then be used for example for traction control, active braking etc. This information can also be transmitted from each wheel arch to a central processing and display unit for example via a wireless telemetry technology for example using the Bluetooth protocol or satellite communication protocol.

The semi-passive wheel has sensors embedded as above but may carry some electronics on board by way of an identity tag. This class may need to be powered in a non-contact way internally or from a coupled external source via e.g. a rotary transformer or RF power. The sensor electronics will still be on the stationary part of the vehicle and a suitable couple will still be required.

The active wheel takes the concept a stage further by incorporating all of the components required to interrogate the sensors in the wheel. The interfaces between the wheel and stationary part consist of a means of communicating bidirectionally probably and preferably in a digital format via for example as RF signals sent via antennae or via a rotating transformer or optical rotary joint. This information can also be transmitted from each wheel arch to a central processing and display unit via for example a wireless telemetry technology for example using the Bluetooth protocol or satellite communication protocol.

In embodiments where it is desirable to communicate wirelessly between the wheel and the vehicle, an antenna may be incorporated within the wheel structure at moulding or embedded at a later stage.

In a particularly embodiment of the invention the means for generating electrical energy generates pulses of electrical energy, for example one pulse of electrical energy per revolution of the wheel. In this case the device according to an embodiment of the invention preferably also includes a counter, which stores a count of the number of the revolutions of the wheel. Preferably, the interrogating device is able to interrogate the stored count to determine the number of revolutions that the wheel has performed. This function is particularly desirable in large wheels such as those used on heavy civil engineering machinery. Tyres for such wheels are frequently leased and may be returned to the factory for re-capping on a number of occasions. It is particularly important that the re-capping process is commenced before the tyre has worn by too large an extent. By providing a remote indication of the total number of revolutions the wheel has completed, the revolution count may be used as a basis for deciding when the tyre should inspected and/or be withdrawn from service for recapping.

In the preferred embodiment of the invention the device for producing a pulse of electrical energy is a piezo-electric device, for example a PVDF device embedded within the structure of the wheel. With such a device the changing stress at one point on the wheel induced by the variable loading at that point as the wheel rotates causes a pulse of electrical energy will be generated. The pulses serve to increment the counter and to charge an electrical storage device.

Preferably, the electrical storage device uses a capacitor as the means for storing the electrical energy. The power requirements of the system are very small, and by using a capacitor rather than primary or secondary electrical cell the device has a very long life expectancy and will not be adversely affected by the harsh environment in which the device has to operate.

Preferably the wheel includes storage means for storing an identification code associated with the sensor; receiving means for receiving a signal from a remote interrogating device, means for sending to the interrogation device signals indicative of the condition to which the sensor is sensitive, means for sending to the interrogation device signals indicative of the identification code, a power supply for supplying electrical energy to the device, and means incorporated in the wheel for storing the electrical energy so generated

In such an embodiment, the arrangement may be such that each wheel will only provide an indication of the state sensed by the sensors in response to an interrogation signal having a portion corresponding to the identification code stored in the memory. The wheel may also issue its own identification code as part of the interrogation sequence. Typically, the wheel mounted device will be activated by sending a signal including a portion corresponding to the identification code of the wheel carrying the device. The device will then transmit the required signals indicative of the state being sensed, and will then transmit a signal indicative of the wheel identification code. The combination of only transmitting sensor information in response to a received signal including a portion corresponding to the stored identification code and transmitting the stored identification code at the end of the sensor information transmitting sequence gives a high degree of certainty to the interrogating device that the sensor information is associated with the correct identification code.

The invention will be better understood from the following description of a preferred embodiment thereof, given by way of example only, reference being had to the accompanying drawings wherein:
Figure 1 shows schematically a first embodiment of the invention;
Figures 2a and 2b illustrate modifications of the embodiment of Figure 1;
Figure 3 illustrates a further embodiment of the invention;
Figure 4 illustrates schematically the components of a further embodiment of the invention.

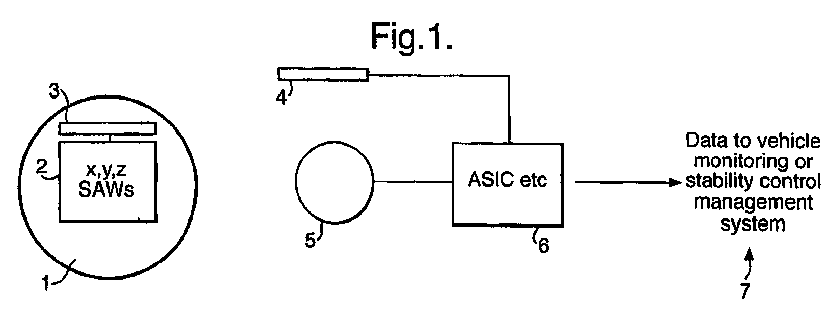

Referring firstly to Figure 1 there is shown schematically a wheel 1 having a condition monitoring system.

The system includes one or more sensors 2; three SAW sensors are shown in Figure 1 to measure strain in three orthogonal axes x,y,z. The sensors can be of any passive type, for example SAW devices or nanophase wire or strip or passive impedance to frequency converting devices and may provide indications of any wheel condition, for example wheel pressure and wheel temperature and multi axis strain in the wheel. It is to be understood, however, that the invention is not limited to such sensors and could be operated with SAW device sensors capable of producing signals other than temperature or pressure and/or with other types of passive sensor.

As will be appreciated by those skilled in the art, SAW device sensors are capable of providing an indication of a characteristic feature of the sensor in response to an interrogation signal sent from a remote RF source. The fully passive system communicates via either an RF couple 5 or antennae 3,4 depending on the interrogation strategy and hardware constraints of the system; both methods of communication are shown. The sensor information is then processed by electronics 6 preferably in the form of an ASIC and then transmitted to the vehicle monitoring or stability control system 7 either via a databus or wirelessly.

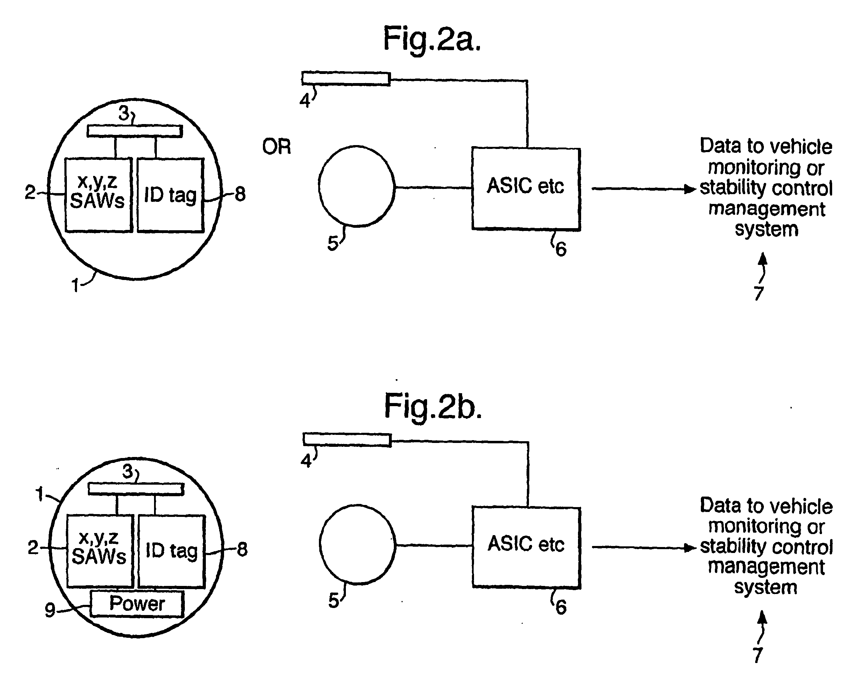

Figure 2a shows a modification of the system of Figure 1 which now incorporates an id tag 8. The id tag 8 has a number of uses particularly in truck or fleet markets as explained in GB-A-2 361 546, which corresponds to our co-pending United Kingdom patent application 0024416.0. This may be read wirelessly or via the RF couple. If read wirelessly it may be at a different frequency to the SAW sensors already described. Again sensor information is then processed by electronics preferably in the form of an ASIC and then transmitted to the vehicle stability/control system either via a databus or wirelessly.

Figure 2b incorporates means 9 for generating a voltage within the wheel such that the system incorporating id tag 8 and SAW based sensors 1 may be self powered and wirelessly interrogated using the technique described in the above-mentioned patent application.

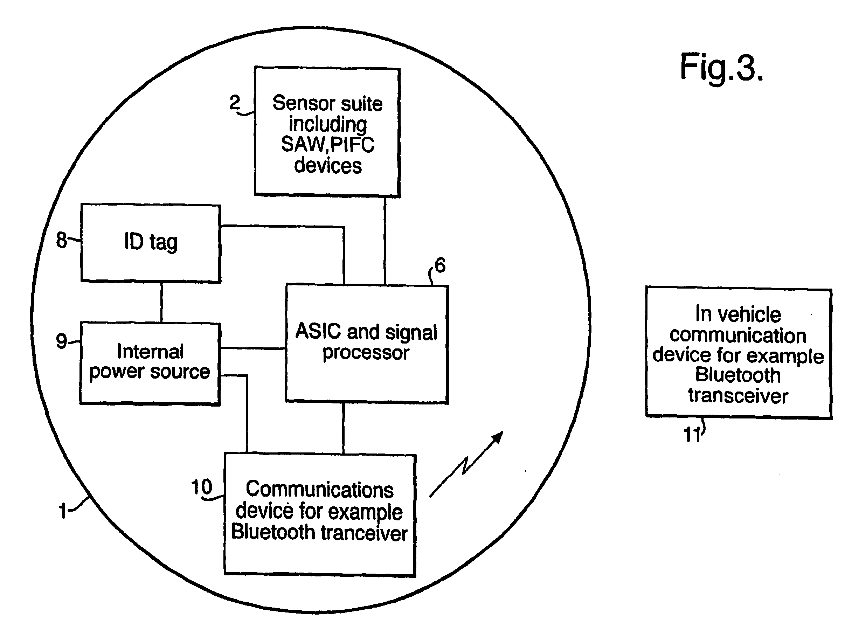

Referring now to Figure 3 there is shown a second embodiment of the invention. In this embodiment the components incorporated in or secured to the wheel 1 comprise appropriate sensors 1, an id tag 8 and an internal power source 9 as in the embodiment of Figure 2b. In this case, however, the required ASIC and signal processing apparatus 6 is incorporated in the wheel and hardwired to sensors 1, id tag 8 and power source 9. Additionally, a communications device 10 is incorporated in the wheel for providing communications to a complementary communication device 11 mounted on a non-rotating part of the vehicle. Communication between the devices 10 and 11 may be by any suitable means, for example by means of RF technology, including, in particular, Bluetooth Technology. Information received by the transceiver 11 is communicated to an appropriate vehicle monitoring or stability control management system.

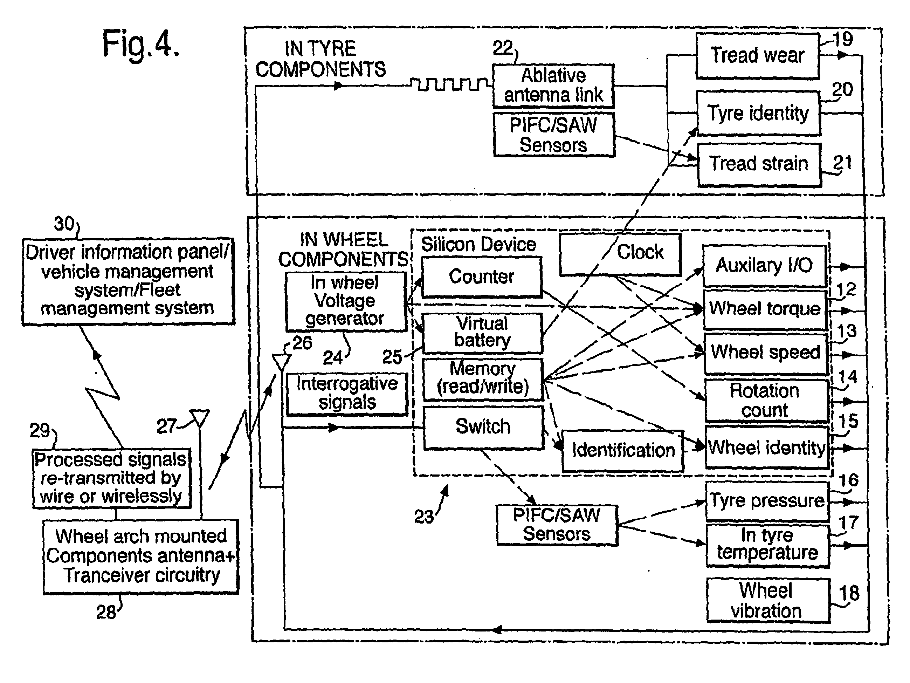

Referring now to Figure 4 a further development of the invention is shown schematically. In this case, the wheel mounted components include a wheel torque sensor 12, a wheel speed sensor 13, a rotation counter 14, an identity tag 15, a tyre pressure sensor 16, a tyre temperature sensor 17, and a wheel vibration sensor 18. The tyre mounted on the wheel incorporates a tread wear sensor 19, a tyre identity device 20 and a tyre strain measuring device 21. Additionally, the tyre incorporates an ablative antenna 22 for providing a signal collection between the in-tyre components and the wheel mounted components. Appropriate control circuitry 23 is provided for controlling the various sensors and providing counter, clock and memory functions. The system is powered by means of an in-wheel voltage generating device 24 the output of which provides pulses which may be used for rotation counting purposes and which are used to charge a virtual battery 25 which forms part of the electronic package 23. An in-wheel antenna 26 is provided to provide communication via a wheel arch mounted antenna 27 to transceiver circuitry 28 mounted on a non-rotating part of the vehicle. Signals processed by the circuitry 28 are retransmitted by appropriate transmitter circuitry 29 to a driver information panel and/or vehicle monitoring or control systems 30.

In each of the above devices at least some of the components are incorporated in a non-metallic part of the wheel at the time of manufacture and become an integral part of the wheel. For example, appropriate sensors may be incorporated within the wheel at the time of manufacture and/or an antenna may be incorporated within the wheel at the time of manufacture. In one relatively simple embodiment of the invention SAW device based strain gauges are incorporated in the spokes of a non-metallic wheel and are connected to an antenna which is an integral part of the wheel as a result of incorporation of a pre-formed antenna at the time of manufacture or the application of an antenna to the surface of the manufactured wheel. By interrogating the strain gauges into the spokes the torque transmitted through the wheel can be monitored. If torque values from all wheels of the vehicle are monitored these values may be used as the input to a traction control or active braking control system. Although the present invention does envisage that certain components will be secured to the wheel after manufacture, the critical characteristics of the invention is that at least some components are incorporated in the wheel at the time of manufacture to provide a low cost high integrity structure which requires a minimum of subsequent assembly with additional components to provide the required functionality.

## Claims

1. A wheel having a structural portion formed from a non-metallic material, the structural portion incorporating as an integral part thereof three saw sensors oriented to measure strain in three orthogonal axes to monitor characteristics of the wheel and/or of a tyre mounted on the wheel and/or of a fluid contained between the wheel and the tyre, whilst the wheel/tyre is in use.

2. A wheel according to claim 1 wherein a silicon device is embedded in or secured to the wheel for calculation of parameters and/or for memorising preset values.

3. A wheel according to claim 1 or claim 2 including an interrogation device for interrogating the passive sensor, wherein the interrogation device incorporates an ASIC embedded in or secured to the wheel.

4. A wheel according to any preceding claim including means embedded in or secured to the wheel for generating electrical power to power the components embedded in or secured to the wheel.

5. A wheel according to any preceding claim in combination with means external to the wheel for supplying energy to the wheel via a wireless connection.

6. A wheel according to claim 4 wherein the means for generating electrical energy generates a fixed number of pulses of electrical energy for each revolution of the wheel.

7. A wheel according to claim 6 wherein the wheel includes a counter which stores a count of the number of pulses to provide a value for the number of revolutions turned by the wheel.

8. A wheel according to claim 6 or claim 7 wherein the device for producing a pulse of electrical energy is a piezo-electric device, for example a PVDF device embedded within the structure of the wheel

9. A wheel according to any preceding claim including storage means for storing an identification code associated with the sensor, receiving means for receiving a signal from a remote interrogating device, means for sending to the interrogation device signals indicative of the condition to which the sensor is sensitive, and means for sending to the interrogation device signals indicative of the identification code.

10. A wheel according to any preceding claim wherein the passive sensor is a SAW device.

## Patentansprüche

1. Rad mit einem strukturellen Abschnitt, der aus einem nichtmetallischen Material besteht, wobei der strukturelle Abschnitt als integralen Teil desselben drei SAW-Sensoren ausgerichtet, um Beanspruchung in drei orthogonalen Achsen zu messen, enthält, um Eigenschaften des Rades und/oder eines Reifens, der auf dem Rad montiert ist, und/oder eines Fluids, das zwischen dem Rad und dem Reifen eingeschlossen ist, zu überwachen, während das Rad/der Reifen in Funktion ist.

2. Rad nach Anspruch 1, wobei eine Siliziumvorrichtung zum Berechnen von Parametern und/oder Speichern voreingestellter Werte in dem Rad eingebettet oder daran befestigt ist.

3. Rad nach Anspruch 1 oder Anspruch 2, das eine Abfragevorrichtung zum Abfragen des passiven Sensors enthält, wobei die Abfragevorrichtung einen ASIC enthält, der in dem Rad eingebettet oder daran befestigt ist.

4. Rad nach einem der vorangehenden Ansprüche, das eine Einrichtung enthält, die in dem Rad eingebettet oder daran befestigt ist, um elektrischen Strom zu erzeugen und die Bauteile, die in dem Rad eingebettet oder daran befestigt sind, mit Strom zu versorgen.

5. Rad nach einem der vorangehenden Ansprüche in Kombination mit einer Einrichtung außerhalb des Rades zum Zuführen von Energie zu dem Rad über eine drahtlose Verbindung.

6. Rad nach Anspruch 4, wobei die Einrichtung zum Erzeugen elektrischer Energie eine feste Anzahl von Impulsen elektrischer Energie für jede Umdrehung des Rades erzeugt.

7. Rad nach Anspruch 6, wobei das Rad eine Zähleinrichtung enthält, die einen Zählwert der Anzahl von Impulsen speichert, um einen Wert für die Anzahl von Umdrehungen bereitzustellen, um die sich das Rad gedreht hat.

8. Rad nach Anspruch 6 oder Anspruch 7, wobei die Vorrichtung zum Produzieren eines Impulses elektrischer Energie eine piezoelektrische Vorrichtung ist, beispielsweise eine PVDF-Vorrichtung, die in die Struktur des Rades eingebettet ist.

9. Rad nach einem der vorangehenden Ansprüche, das eine Speichereinrichtung zum Speichern eines Identifizierungscodes, der mit dem Sensor verbunden ist, eine Empfangseinrichtung zum Empfangen eines Signals von einer Fern-Abfragevorrichtung, eine Einrichtung zum Senden von Signalen, die den Zustand anzeigen, für den der Sensor empfindlich ist, zu der Abfragevorrichtung, und eine Einrichtung zum Senden von Signalen, die den Identifizierungscode anzeigen, zu der Abfragevorrichtung enthält.

10. Rad nach einem der vorangehenden Ansprüche, wobei der passive Sensor eine SAW-Vorrichtung ist.

## Revendications

1. Roue ayant une partie structurelle formée à partir d'un matériau non métallique, laquelle partie structurelle incorporant en tant que partie intégrante de cette dernière trois capteurs SAW orientés pour mesurer des sollicitations dans trois axes orthogonaux pour surveiller les caractéristiques de la roue et/ou d'un pneu monté sur la roue et/ou d'un fluide contenu entre la roue et le pneu, alors que la roue/le pneu est utilisé (e).

2. Roue selon la revendication 1, dans laquelle un dispositif en silicium est encastré dans ou fixé sur la roue afin de calculer les paramètres et/ou de mémoriser les valeurs préétablies.

3. Roue selon la revendication 1 ou 2 comprenant un dispositif d'interrogation afin d'interroger le capteur passif, dans laquelle le dispositif d'interrogation incorpore des circuits intégrés à application spécifique (ASIC) encastrés dans ou fixés sur la roue.

4. Roue selon l'une quelconque des revendications précédentes comprenant des moyens encastrés dans ou fixés sur la roue pour générer la puissance électrique afin d'alimenter les composants encastrés dans ou fixés sur la roue.

5. Roue selon l'une quelconque des revendications précédentes en combinaison avec des moyens externes à la roue pour fournir de l'énergie à la roue via une connexion sans fil.

6. Roue selon la revendication 4, dans laquelle les moyens destinés à générer de l'énergie électrique génèrent un nombre fixe d'impulsions d'énergie électrique pour chaque tour de roue.

7. Roue selon la revendication 6, dans laquelle la roue comprend un compteur qui stocke le compte du nombre d'impulsions pour fournir une valeur pour le nombre de tours effectués par la roue.

8. Roue selon la revendication 6 ou 7, dans laquelle le dispositif pour produire une impulsion d'énergie électrique est un dispositif piézoélectrique, par exemple un dispositif à polymère piézoélectrique encastré à l'intérieur de la structure de la roue.

9. Roue selon l'une quelconque des revendications précédentes comprenant des moyens de stockage destinés à stocker un code d'identification associé au capteur ; des moyens de réception destinés à recevoir un signal depuis un dispositif d'interrogation à distance, des moyens destinés à envoyer vers le dispositif d'interrogation des signaux indiquant la condition à laquelle le capteur est sensible, et des moyens destinés à envoyer vers le dispositif d'interrogation des signaux indiquant le code d'identification.

10. Roue selon l'une quelconque des revendications précédentes, dans laquelle le capteur passif est un dispositif à ondes élastiques de surface.
